# EUROPEAN PATENT APPLICATION

(11) **EP 4 847 822 A1**
(43) Date of publication of application: **02.12.2026**
(21) Application number: 25196470.6
(22) Date of filing: 18.08.2025
(51) Int. Cl.: F16M 7/00

(54) **FOOT STRUCTURE**

(30) Priority: 27.05.2025 CN 202510689736
(71) Applicant: Delta Electronics, Inc., Taoyuan City 33341 (TW)
(72) Inventor: HSIAO, Yuan-Kun, Taoyuan City (TW); LI, Feng-You, Taoyuan City (TW)
(74) Representative: 2K Patent Partnerschaft mbB

(57) **Abstract**

A foot structure for supporting a machine is provided. The foot structure includes a supporting pillar, a foot disk, and a first fixing member. The supporting pillar includes an end having an arc structure. The foot disk has a recess that is used to enable the end of the supporting pillar to movably connect to the recess. The first fixing member passes through the foot disk along the first direction and abuts the supporting pillar. The first fixing member includes a deforming section, and the deforming section includes a flexible metal. When the first fixing member abuts the supporting pillar, at least a portion of the deforming section is deformed so that it complies with the appearance of the supporting pillar.

## Description

### CROSS REFERENCE TO RELATED APPLICATIONS

This application claims priority of China patent application No. 202510689736.2, filed May 27, 2025, the entirety of which is incorporated by reference herein.

### TECHNICAL FIELD

The present disclosure relates to a foot structure, and, in particular, it relates to a foot structure that can be used on an inclined surface or an irregular surface.

### BACKGROUND

The process of manufacturing any product requires the use of various machines, and those machines may have various dimensions. For the sake of operating conveniently, a user can place each machine on a foot to operate it at a suitable height. However, when space is limited, the surface on which a machine is placed may be inclined or irregular. This may cause the machine to become damaged easily, or to make it unable to operate properly. Thus, how to address the aforementioned problem has become an important issue.

### BRIEF SUMMARY

An embodiment of the present disclosure provides a foot structure for supporting a machine. The foot structure includes a supporting pillar, a foot disk, and a first fixing member. The supporting pillar includes an end having an arc structure. The foot disk has a recess that is used to allow the end of the supporting pillar to movably connect to the recess. The first fixing member passes through the foot disk along the first direction and abuts the supporting pillar. The first fixing member includes a deforming section, and the deforming section includes a flexible metal. When the first fixing member abuts the supporting pillar, at least a portion of the deforming section is deformed to comply with the appearance of the supporting pillar.

In some embodiments, the first fixing member includes an engaging section, the engaging section is connected to the deforming section, and the material of the engaging section is different from the material of the deforming section.

In some embodiments, the deforming section is adhered to the engaging section.

In some embodiments, the supporting pillar includes a contacting section configured to be in contact to the first fixing member, and the largest width of the arc structure is greater than the largest width of the contacting section.

In some embodiments, the dimensions of the recess are greater than or equal to the dimensions of the arc structure.

In some embodiments, the foot structure further includes a second fixing member and a friction pad. The second fixing member passes through the foot disk along a second direction, the second direction is different from the first direction, and the second fixing member is movable relative to the foot disk along the second direction. The friction pad is connected to the second fixing member.

In some embodiments, the foot disk includes a positioning structure having a depression portion, and the foot structure further includes a positioning plate accommodated in the depression portion. The second fixing member passes through the positioning plate, the positioning plate is attached to the friction pad, and the dimensions of the positioning plate are substantially the same as the dimensions of the depression portion.

In some embodiments, the foot structure includes a plurality of second fixing members and a plurality of friction pads, and the pitches between the adjacent friction pads are different.

In some embodiments, the foot structure further includes a sleeve and a nut. The sleeve places around the supporting pillar and is configured to affix the foot structure to the machine. The nut is connected to the supporting pillar and being in contact with the sleeve.

In some embodiments, the roughness of the surface of the foot disk facing away the sleeve is greater than the roughness of the surface of the foot disk facing the sleeve.

### BRIEF DESCRIPTION OF DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
Fig. 1A to Fig. 1C are schematic diagrams represent that a machine is disposed on a foot structure according to an embodiment of the present disclosure;
Fig. 2 is an exploded-view diagram of the foot structure according to an embodiment of the present disclosure;
Fig. 3 is a cross-sectional view of the foot structure according to an embodiment of the present disclosure;
Fig. 4 is a partial cross-sectional view of the foot structure according to an embodiment of the present disclosure;
Fig. 5 is a cross-sectional view of the foot structure according to an embodiment of the present disclosure;
Fig. 6 is a bottom view of the foot structure according to an embodiment of the present disclosure; and
Fig. 7 is a schematic diagram represents that a machine is disposed on an inclined surface or an irregular surface via the foot structure according to an embodiment of the present disclosure.

### DETAILED DESCRIPTION

The making and using of the embodiments of the foot structure are discussed in detail below. It should be appreciated, however, that the embodiments provide many applicable inventive concepts that can be embodied in a wide variety of specific contexts. The specific embodiments discussed are merely illustrative of specific ways to make and use the embodiments, and do not limit the scope of the disclosure.

Unless defined otherwise, all technical and scientific terms used herein have the same meaning as commonly understood by one of ordinary skill in the art to which this invention belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

The following disclosure provides many different embodiments, or examples, for implementing different features of the subject matter provided. Specific examples of solutions and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. Furthermore, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

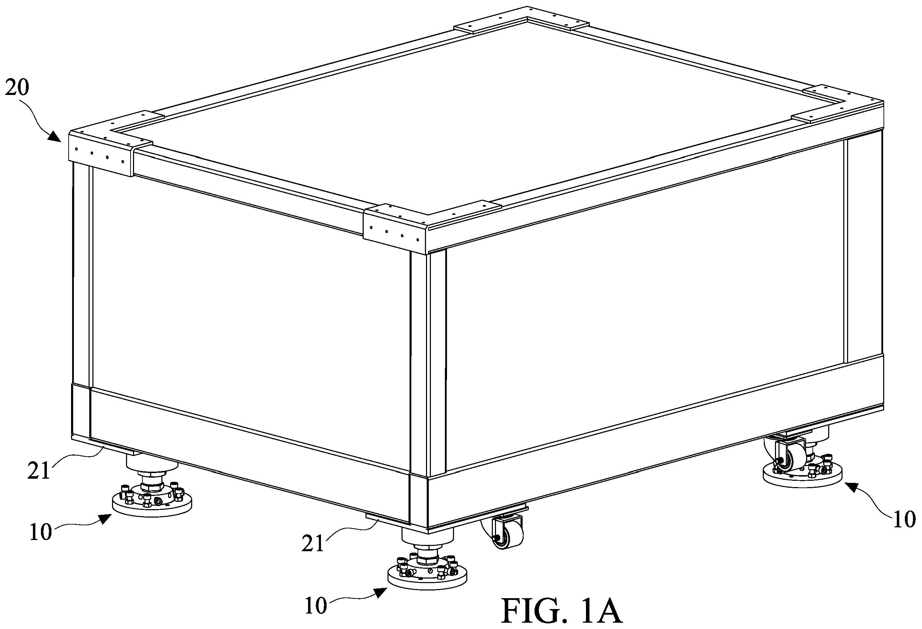

Referring to Fig. 1A to Fig. 1C, a foot structure 10 according to an embodiment of the present disclosure can be used to support a machine 20, so that the machine 20 can be horizontally disposed on any surface P, even if the surface P is inclined or undulated. For example, one or more locking members 30 (such as the screws or the rivets) can pass through the base 21 of the machine 20 and connect to the foot structure 10, and the machine 20 can be affixed to the foot structure 10. The machine 20 can be a process apparatus or a storage apparatus, but it is not limited thereto.

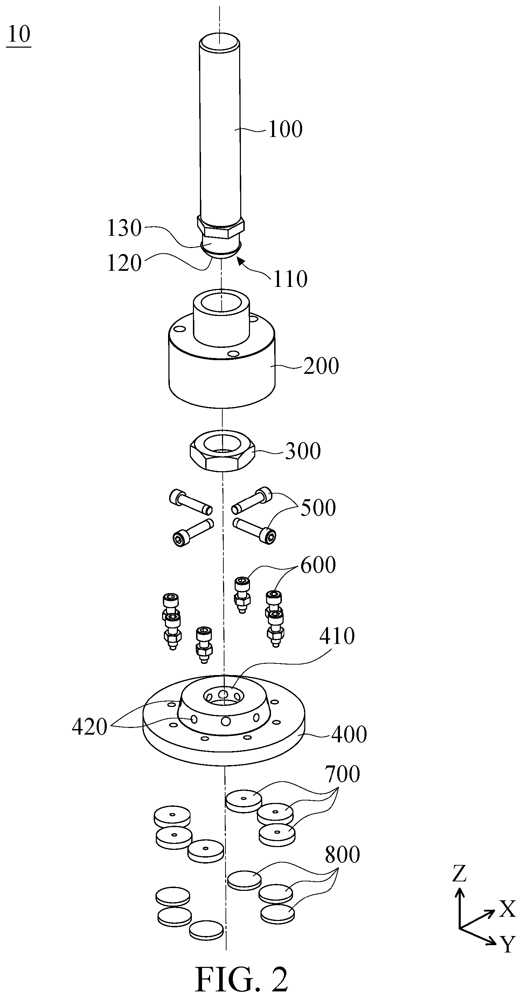

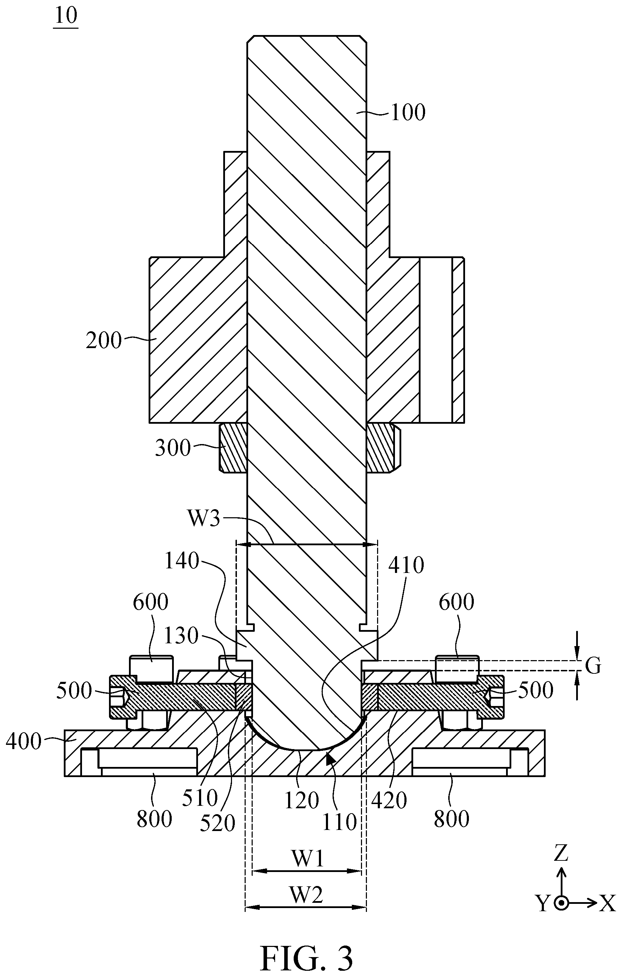

Fig. 2 is an exploded-view diagram of the foot structure 10, and Fig. 3 is a cross-sectional view of the foot structure 10. As shown in Fig. 1A to Fig. 3, the foot structure 10 primarily includes a supporting pillar 100, a sleeve 200, a nut 300, a foot disk 400, a plurality of first fixing members 500, a plurality of second fixing member 600, a plurality of positioning plates 700, and a plurality of friction pads 800.

The supporting pillar 100 can be a bolt. The nut 300 can be connected to the supporting pillar 100, the sleeve 200 can be placed around the supporting pillar 100, and the bottom of the sleeve 200 can be in contact with the nut 300. Therefore, the user can adjust the position of the nut 300 on the supporting pillar 100 to change the height of the sleeve 200. When the user uses the locking members 30 to affix the machine 20, the locking members 30 can be affixed to the sleeve 200. Thus, when the height of the sleeve 200 is changed, the distance between the machine 20 and the foot disk 400 can be changed accordingly. In some embodiments, a corresponding screw thread can be formed on the inner surface of the sleeve 200 that is in contact with the supporting pillar 100, and the nut 300 can be omitted.

The end 110 of the supporting pillar 100 facing the foot disk 400 has an arc structure 120, and the supporting pillar 100 includes a contacting section 130 adjacent to the arc structure 120. The foot disk 400 includes a recess 410, the dimensions of the recess 410 are greater than or equal to the dimensions of the arc structure 120, and the profile of the bottom of the recess 410 corresponds to the profile of the arc structure 120. Furthermore, the largest width W1 of the contacting section 130 is less than the largest width W2 of the arc structure 120, and a gap is formed between the contacting section 130 and the recess 410. The aforementioned gap can be 1.5 millimeters, for example.

The foot disk 400 can further include a plurality of through holes 420. The extending direction of those through holes 420 can be defined as the first direction (in the figures, the first direction is the direction that is perpendicular to the Z-axis, such as the X-axis or the Y-axis), and the through holes 420 can be communicated with the recess 410. The first fixing members 500 can pass through the through holes 420 along the first direction in the one-on-one manner and enter the recess 410.

As shown in Fig. 3, each of the first fixing members 500 includes an engaging section 510 and a deforming section 520. The deforming section 520 is connected to the engaging section 510. For example, the deforming section 520 can be affixed to an end of the engaging section 510 by adhering. The outer surface of the engaging section 510 has a screw thread, so that the deforming section 520 can be positioned at a suitable position. The engaging section 510 includes a material with a higher stiffness, such as iron, stainless steel, carbon steel, etc. The deforming section 520 includes a flexible metal, such as copper alloy.

When the user assembles the supporting pillar 100 to the foot disk 400, the end 110 of the supporting pillar 100 can be firstly inserted into the recess 410 of the foot disk 400. Since the dimensions of the recess 410 are greater than or equal to the dimensions of the arc structure 120, and the profile of the bottom of the recess 410 corresponds to the profile of the arc structure 120, the supporting pillar 100 can move relative to the foot disk 400. After the supporting pillar 100 is adjusted to a suitable angle, the first fixing members 500 can pass through the through holes 420 along the first direction, and the deforming sections 520 of the first fixing members 500 can abut and be in contact with the contacting section 130 of the supporting pillar 100.

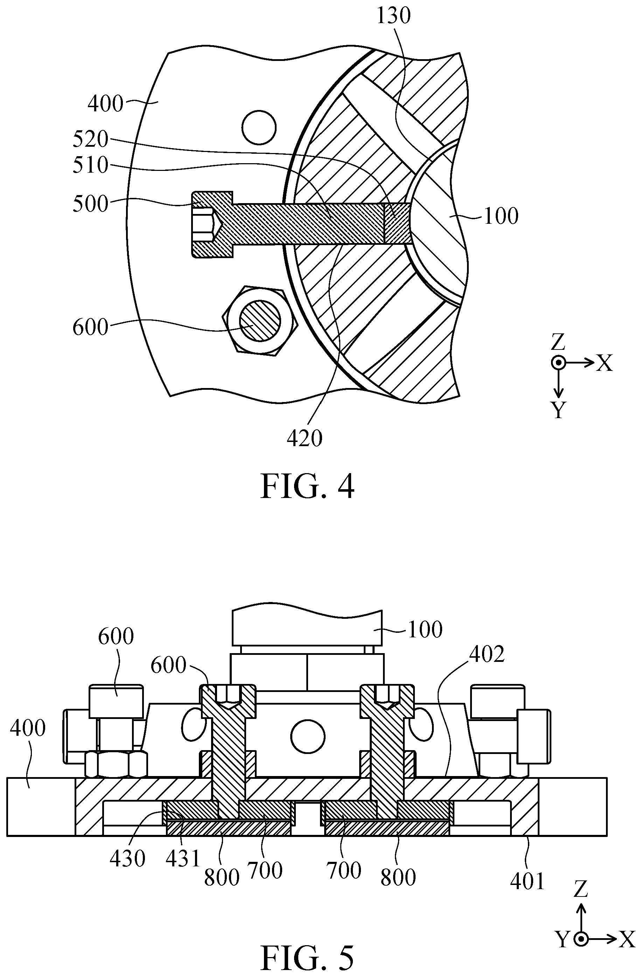

As shown in Fig. 4, after the first fixing members 500 are in contact with the contacting section 130 of the supporting pillar 100, the user can continuously apply external force on the first fixing members 500, so as to let the first fixing members 500 to be pressed onto the supporting pillar 100. At this time, the deforming sections 520 of the first fixing members 500 can be deformed. At least a portion of the deforming section 520 is deformed to make it comply with the appearance of the contacting section 130 (that is, at least a portion of the deforming section 520 is deformed in a way that complements the appearance of the contacting section 130). Therefore, a surface contact can be formed between the first fixing members 500 and the supporting pillar 100, the friction between the first fixing members 500 and the supporting pillar 100 can be increased, and the supporting pillar 100 can be stably affixed to the foot disk 400.

Moreover, since the largest width W1 of the contacting section 130 is less than the largest width W2 of the arc structure 120, when the first fixing members 500 abut the contacting section 130, the supporting pillar 100 is not detached from the foot disk 400 even if a larger upward external force is applied on the supporting pillar 100.

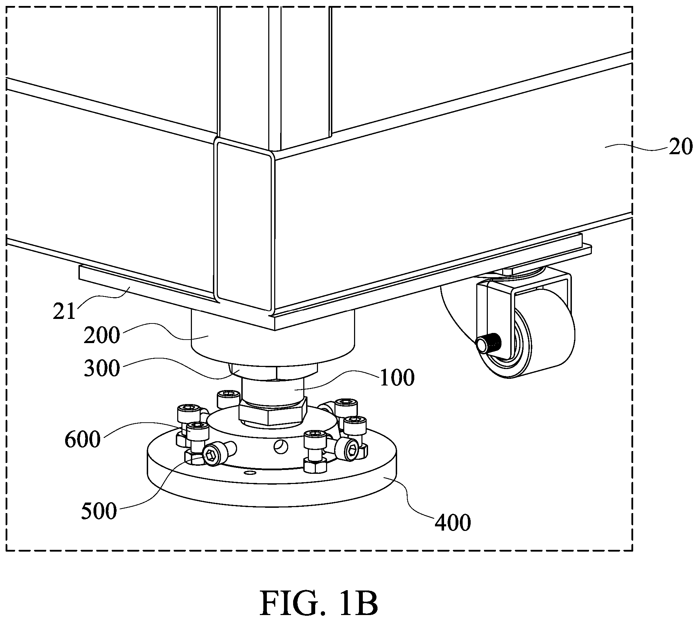

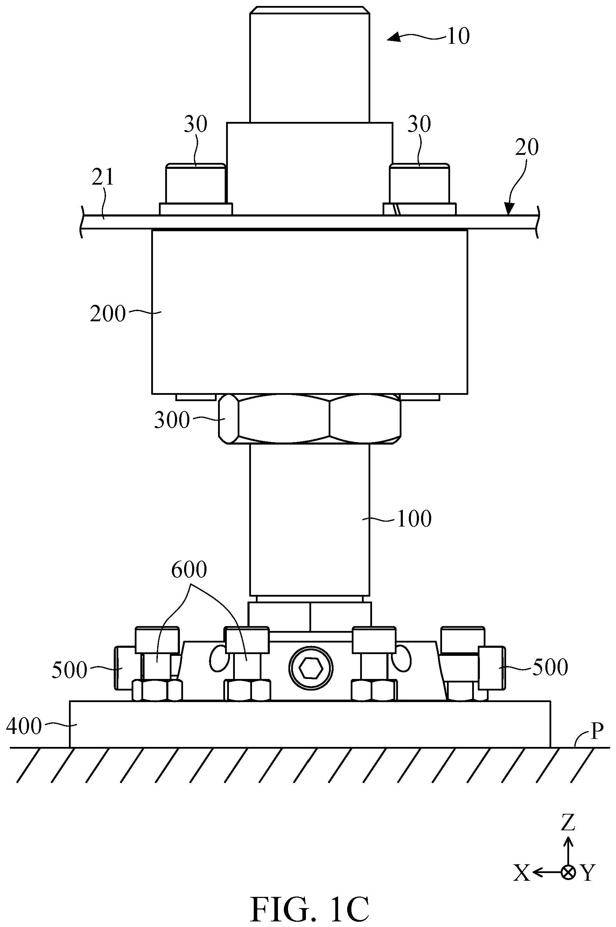

Referring to Fig. 1, Fig. 2, Fig. 5, and Fig. 6, the foot disk 400 can include a plurality of positioning structures 430. Each of the positioning structures 430 has a depression portion 431, and the dimensions (the cross-sectional area) of each depression portion 431 is substantially the same as the dimensions (the cross-sectional area) of each positioning plate 700. The position plates 700 are movably accommodated in the depression portions 431, the second fixing members 600 pass through the foot disk 400 along the second direction and connect to the positioning plates 700, and the friction pads 800 are attached to the positioning plates 700. The second direction is substantially perpendicular to the first direction.

The outer surface of each of the second fixing members 600 has a screw thread, so that the user can adjust the positions of the second fixing members 600 relative to the foot disk 400 along the second direction, and the second fixing members 600 can be positioned at the desired position after they move to there. When the second fixing members 600 move along the second direction, the positioning plates 700 and the friction pads 800 move accordingly. Therefore, it can be ensured that there are multiple portions to be in contact with the surface P when the foot structure 10 is placed on the surface P, and the unstable or the sliding of the foot structure 10 can be perverted.

Since the dimensions of each positioning plate 700 accommodated in each recess 431 is substantially the same as the dimensions of each recess 431, the shift movements of the positioning plates 700 or the friction pads 800 during the second fixing members 600 move or the machine 20 presses downwardly can be prevented. In this embodiment, the positioning plates 700 include metal, and the friction pads 800 include rubber. A surface treatment can be applied on the surface 401 of the foot disk 400 facing away from the sleeve 200 (that is, the surface being in contact with the surface P) to increase the friction coefficient between the surface 401 and the surface P. Thus, the roughness of the surface 401 of the foot disk 400 facing away from the sleeve 200 can be greater than the roughness of the surface 402 of the foot disk 400 facing the sleeve 200. For example, the foot disk 400 can include steel, and the surface 401 of the foot disk 400 facing away from the sleeve 200 can applied the surface treatment, such as blasting and special electrophoresis.

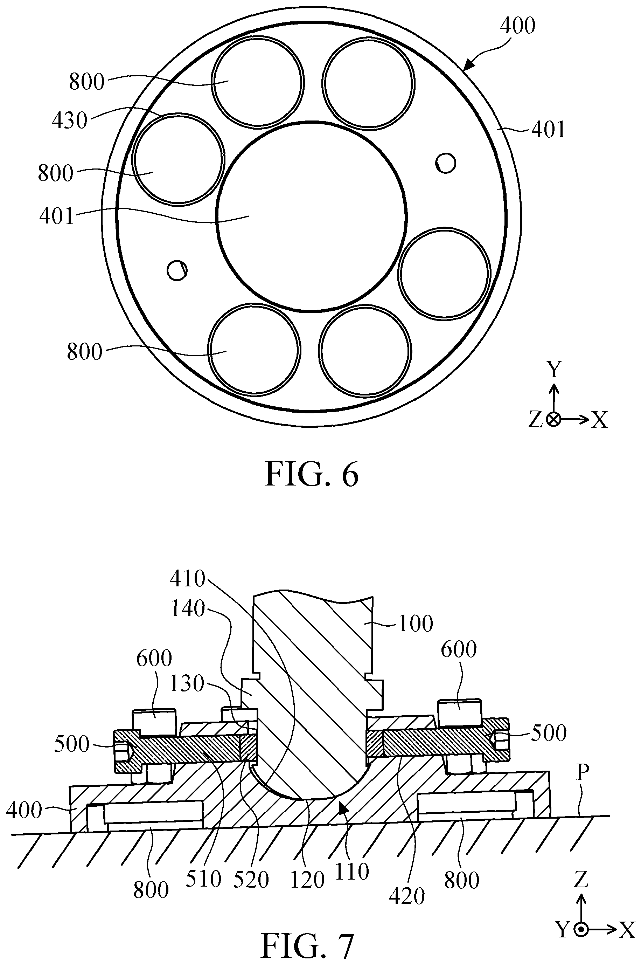

As shown in Fig. 6, as observed from the bottom of the foot structure 10, the friction pads 800 can be arranged with different pitches. In other words, the distance between the adjacent friction pads 800 can be different.

Moreover, as shown in Fig. 3, in this embodiment, the supporting pillar 100 includes a protruding portion 140. The largest width W3 of the protruding portion 140 is greater than the largest width W2 of the arc structure 120. When the supporting pillar 100 and the foot disk 400 are connected, a gap G is formed between the protruding portion 140 and the foot disk 400. The gap G can be in a range between 2 millimeters to 4 millimeters (such as 3 millimeters), but it is not limited thereto.

Referring to Fig. 7, when the machine 20 is disposed on the inclined or irregular surface P by using the foot structure 10 according to the present disclosure, the supporting pillar 100 is able to rotate relative to the foot disk 400, so that the machine 20 can be horizontally placed. The deforming sections 520 on the first fixing members 500 that is used to fix the supporting pillar 100 can abut the contacting section 130 of the supporting pillar 100, and can be deformed corresponding to the appearance of the rotated supporting pillar 100, so that the supporting pillar 100 can be still stably affixed to the foot structure 10.

The second fixing members 600 can adjust their positions relative to the foot disk 400 according to the corresponding undulation of the surface P, so that the friction pads 800 connected to the second fixing member 600 can be still in contact with the surface P, and the condition in that the foot structure 10 slides down from the surface P can be prevented.

Since the positions of the friction pads 800 of the foot structure 10 can be adjusted to let them being contact with the surface P, the toque of the second fixing members 600 and the normal force of the machine 20 are mostly applied on the friction pads 800 with high friction coefficient. The normal force applied on the material with low friction coefficient can be reduced, so that the largest static friction between the foot structure 10 and the surface P can be obtained. Therefore, since the foot structure 10 can provide the larger friction relative to the conventional foot, the foot structure 10 has the brilliant slip resistance.

In summary, an embodiment of the present disclosure provides a foot structure configured to support a machine. The foot structure includes a supporting pillar, a sleeve, a foot disk, and a first fixing member. The supporting pillar includes an end having an arc structure. The sleeve is disposed on the supporting pillar, and the machine is disposed on the sleeve. The foot disk has a recess, and the end of the supporting pillar is movably connected to the recess. The first fixing member passes through the foot disk along the first direction and abuts the supporting pillar. The first fixing member includes a deforming section, and the deforming section includes a flexible metal. When the first fixing member abuts the supporting pillar, at least a portion of the deforming section is deformed to be complementary to the appearance of the supporting pillar.

Although some embodiments of the present disclosure and their advantages have been described in detail, it should be understood that various changes, substitutions and alterations can be made herein without departing from the spirit and scope of the disclosure as defined by the appended claims. For example, it will be readily understood by those skilled in the art that many of the features, functions, processes, and materials described herein may be varied while remaining within the scope of the present disclosure. Moreover, the scope of the present application is not intended to be limited to the particular embodiments of the process, machine, manufacture, compositions of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps. Moreover, the scope of the appended claims should be accorded the broadest interpretation so as to encompass all such modifications and similar arrangements.

While the invention has been described by way of example and in terms of preferred embodiment, it should be understood that the invention is not limited thereto. On the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. A foot structure for supporting a machine, comprising:
a supporting pillar, including an end having an arc structure;
a foot disk, having a recess, wherein the recess is used to enable the end of the supporting pillar to movably connect to the recess; and
a first fixing member, passing through the foot disk along a first direction and abutting the supporting pillar, wherein the first fixing member includes a deforming section, and the deforming section includes a flexible metal, wherein when the first fixing member abuts the supporting pillar, at least a portion of the deforming section is deformed to make it compliant with an appearance of the supporting pillar.

2. The foot structure as claimed in claim 1, wherein the first fixing member includes an engaging section, the engaging section is connected to the deforming section, and a material of the engaging section is different from a material of the deforming section.

3. The foot structure as claimed in claim 2, wherein the deforming section is adhered to the engaging section.

4. The foot structure as claimed in claim 1, wherein the supporting pillar comprises a contacting section configured to be in contact to the first fixing member, and a largest width of the arc structure is greater than a largest width of the contacting section.

5. The foot structure as claimed in claim 1, wherein the dimensions of the recess are greater than or equal to the dimensions of the arc structure.

6. The foot structure as claimed in claim 1, wherein the foot structure further comprises:
a second fixing member, passing through the foot disk along a second direction, wherein the second direction is different from the first direction, and the second fixing member is movable relative to the foot disk along the second direction; and
a friction pad, connected to the second fixing member.

7. The foot structure as claimed in claim 6, wherein the foot disk comprises a positioning structure having a depression portion, and the foot structure further comprises a positioning plate accommodated in the depression portion, wherein the second fixing member passes through the positioning plate, the positioning plate is attached to the friction pad, and the dimensions of the positioning plate are substantially the same as the dimensions of the depression portion.

8. The foot structure as claimed in claim 6, wherein the foot structure comprises a plurality of second fixing members and a plurality of friction pads, and pitches between the adjacent friction pads are different.

9. The foot structure as claimed in claim 1, wherein the foot structure further comprises:
a sleeve, placed around the supporting pillar and configured to affix the foot structure to the machine; and
a nut, connected to the supporting pillar and being in contact with the sleeve.

10. The foot structure as claimed in claim 9, wherein a roughness of a surface of the foot disk facing away the sleeve is greater than a roughness of a surface of the foot disk facing the sleeve.

## Amended claims

### Amended claims in accordance with Rule 137(2) EPC.

1. A foot structure for supporting a machine, comprising:
a supporting pillar, including an end having an arc structure;
a foot disk, having a recess, wherein the recess is used to enable the end of the supporting pillar to movably connect to the recess; and
a first fixing member, passing through the foot disk along a first direction and abutting the supporting pillar, wherein the first fixing member includes a deforming section and an engaging section that is connected to the deforming section, the deforming section includes a flexible metal, and a material of the engaging section is different from a material of the deforming section wherein when the first fixing member abuts the supporting pillar, at least a portion of the deforming section is deformed to make it compliant with an appearance of the supporting pillar.

2. The foot structure as claimed in claim 1, wherein the deforming section is adhered to the engaging section.

3. The foot structure as claimed in claim 1, wherein the supporting pillar comprises a contacting section configured to be in contact to the first fixing member, and a largest width of the arc structure is greater than a largest width of the contacting section.

4. The foot structure as claimed in claim 1, wherein the dimensions of the recess are greater than or equal to the dimensions of the arc structure.

5. The foot structure as claimed in claim 1, wherein the foot structure further comprises:
a second fixing member, passing through the foot disk along a second direction, wherein the second direction is different from the first direction, and the second fixing member is movable relative to the foot disk along the second direction; and
a friction pad, connected to the second fixing member.

6. The foot structure as claimed in claim 5, wherein the foot disk comprises a positioning structure having a depression portion, and the foot structure further comprises a positioning plate accommodated in the depression portion, wherein the second fixing member passes through the positioning plate, the positioning plate is attached to the friction pad, and the dimensions of the positioning plate are substantially the same as the dimensions of the depression portion.

7. The foot structure as claimed in claim 5, wherein the foot structure comprises a plurality of second fixing members and a plurality of friction pads, and pitches between the adjacent friction pads are different.

8. The foot structure as claimed in claim 1, wherein the foot structure further comprises:
a sleeve, placed around the supporting pillar and configured to affix the foot structure to the machine; and
a nut, connected to the supporting pillar and being in contact with the sleeve.

9. The foot structure as claimed in claim 8, wherein a roughness of a surface of the foot disk facing away the sleeve is greater than a roughness of a surface of the foot disk facing the sleeve.
